(19) Europäisches Patentamt
European Patent Office
Office européen des brevets

(11) **EP 2 131 052 A1**

(12) **EUROPÄISCHE PATENTANMELDUNG**

(43) Veröffentlichungstag:
**09.12.2009 Patentblatt 2009/50**

(51) Int Cl.:
***F16C 32/04*** *(2006.01)*

(21) Anmeldenummer: **08010194.2**

(22) Anmeldetag: **04.06.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(71) Anmelder: **SIEMENS AKTIENGESELLSCHAFT**
**80333 München (DE)**

(72) Erfinder:
• **Denk, Joachim, Dr.**
**90419 Nürnberg (DE)**
• **Köpken, Hans-Georg, Dr.**
**91056 Erlangen (DE)**
• **Stoiber, Dietmar**
**90763 Fürth (DE)**
• **Wedel, Bernd**
**91096 Möhrendorf (DE)**

(54) **Verfahren zum Lagern eines Körpers mit einer Magnetlageranordnung**

(57) In einer Magnetlageranordnung sind Tragspulen in Reihe geschaltet und können mit einem Strom (Ia, Ib) beschickt werden. Durch die Kopplung eines die beiden Tragspulen (14,14') verbindenden Punkt (18) mit einer Spannungsquelle (U) können die Tragspulen als Stellelemente verwendet werden, und durch Beschicken der Tragspulen (14,14') mit Spannungspulsen kann durch Messung des durch die Spannungspulse verursachten Stroms auf die Induktivität der Tragspulen (14,14') zurückgeschlossen werden, was ein Indiz für die Position des zu lagernden Körpers (10) ist. Damit wird eine Positionsregelung ermöglicht. Mit ein und denselben Tragspulen (14,14') lässt sich also sowohl eine stabil geregelte Tragkraft aufbringen und gleichzeitig ein Positionssensor ersetzen.

FIG 1

EP 2 131 052 A1

**Beschreibung**

Die Erfindung betrifft ein Verfahren zum Lagern eines Körpers, wobei das Verfahren sowohl bei Linearmotoren als auch bei rotatorischen Motoren eingesetzt werden kann. Bevorzugt ist eine Anwendung bei rotatorischen Motoren, und zwar wird dann die Welle eines Rotors in dem Magnetlager gelagert. Die Magnetlageranordnung ist dann selbst Teil des Stators.

Die Lagerung soll insbesondere aktiv geregelt sein können. Dies impliziert, dass das Magnetfeld für das Magnetlager zumindest teilweise durch zwei Spulen erzeugt wird, welche die Kraft zum Tragen des Körpers hervorrufen und daher als Tragspulen bezeichnet werden können. Üblicherweise ist eine aktiv geregelte Magnetlageranordnung mit einem Positionssensor versehen. Der Positionssensor erfasst ein Messsignal für die Position des Körpers in der Magnetlageranordnung, und dieser Messwert wird in einem Regelkreis als Eingangsgröße (Regelgröße) verwendet. An einen Positionssensor werden in einer Magnetlageranordnung hohe Anforderungen gestellt: Es ist wegen starker Beanspruchung notwendig, dass der Positionssensor ausreichend robust ist. Der Positionssensor darf wenig Platz in Anspruch nehmen. Bei einem Rotor darf das von dem Positionssensor erzeugte Signal nur eine geringe Phasenlaufzeit haben, und die Rauschleistung des Signals muss gering sein. Üblicherweise werden als Positionssensor Sensoren eingesetzt, die kapazitiv oder induktiv arbeiten. Der Einsatz eines Sensors zum Messen der Position bringt den Nachteil mit sich, dass ein Montageaufwand entsteht, weil der Sensor montiert und justiert werden muss, Signalleitungen vom Inneren des Magnetlagers zur Auswerteelektronik verlegt werden müssen und diese Auswerteelektronik mit der Regeleinheit verdrahtet werden muss. Wegen des Platzbedarfs des Positionssensors wird der Bauraum des Gesamtsystems üblicherweise größer als er es ohne Positionssensor wäre. Die Tragkraft des Magnetlagers ist alleine durch die Baugröße der magnetischen Aktivteile bestimmt. Durch die notwendigen Positionssensoren, wie sie im Stand der Technik verwendet werden, nimmt die Baugröße des Magnetlagers zu, ohne dass sich dabei dessen Tragkraft vergrößert. Aus regelungstechnischer Sicht ist zudem nachteilig, dass ein einzelner Sensor die Lage an einem einzelnen diskreten Punkt misst. Dieser geometrische Messpunkt liegt aus baulichen Gründen immer abseits vom Wirkungsort der magnetischen Aktivteile. Insbesondere im Falle von Biegeschwingungen des zu lagernden Körpers (was insbesondere bei einem Rotor auftreten kann) kann die Schwingungsamplitude an der Wirkfläche des magnetischen Aktivteils erheblich von der am Sensor gemessenen Schwingungsamplitude abweichen. Es kann im Extremfall sogar ein Vorzeichenunterschied auftreten, wodurch die Regelung instabil wird.

Die WO 93/23683 beschreibt einen Magnetlagerregler, bei dem als Lagerelement zumindest zwei in Reihe geschaltete elektrische Spulen dienen, wobei das Spulenpaar sowohl als Positionssensor als auch als elektromagnetisches Stellglied wirkt. Das von den Spulen erzeugte Magnetfeld überlagert sich zu dem von einem Permanentmagnetenpaar erzeugten Vormagnetisierungsfeld. Auf der einen Seite bewirkt es Feldverstärkung, auf der anderen Feldschwächung, wodurch die eigentliche Tragkraft entsteht. Es wird ein Hochfrequenzsignal in die Spulen eingespeist. Zwischen den beiden Spulen wird das Signal über einen Hochpassfilter von einem phasenempfindlichen Gleichrichter abgegriffen, dessen Ausgang dann bei der Regelung des an die Spulen angelegten Ausgangssignals verwendet wird. Die in der WO 93/23683 verwendete Potentialmessung an einem Punkt zwischen den beiden Spulen lässt sich nicht mit dem Einsatz der Spulen als Tragspulen und Vormagnetisierungsspulen vereinbaren. Will man die Vormagnetisierung auch durch Spulen statt durch Permanentmagnete aufbringen, so müssen diese Vormagnetisierungsspulen als zusätzliche Bauteile zu den beiden Spulen des Magnetlagerreglers hinzutreten.

Aufgabe der Erfindung, die Nachteile der Magnetlageranordnungen des Standes der Technik zu beseitigen und insbesondere ein einfaches Messverfahren für die Position des Körpers bereitzustellen, bei dem eine kompakt gebaute, leicht montierbare Magnetlageranordnung verwendbar ist. Möglichst soll auch eine optimale Regelung der Position des Körpers ermöglicht sein.

Die Aufgabe wird durch ein Verfahren zum Lagern eines Körpers mit den Merkmalen gemäß Patentanspruch 1 gelöst. Zur Erfindung gehört auch eine Vorrichtung gemäß Patentanspruch 6.

Die Erfindung geht von einer Magnetlageranordnung aus, wie sie in der nach dem Anmeldetag der vorliegenden Anmeldung veröffentlichten PCT/EP 2007/060413 beschrieben ist. Sie weist zwei Tragspulen auf, die in Reihe geschaltet sind, wobei die Reihenschaltung mit einer Spannung beaufschlagbar ist. Dies wird dadurch ermöglicht, dass die Tragspulen, welche ja einen ersten und einen zweiten Anschluss aufweisen müssen, mit ihrem jeweils ersten Anschluss mit einer steuerbaren Spannungsquelle gekoppelt, insbesondere verbunden sind. Als Spannungsquelle wird dabei eine eine Potentialdifferenz zwischen zwei Anschlusspunkten anlegende Einheit verstanden. Die jeweils zweiten Anschlüsse der beiden Tragspulen sind mittels eines Verbindungsleiters miteinander verbunden. Ferner ist in der verwendeten Magnetlageranordnung auch der Verbindungsleiter der beiden Tragspulen steuerbar mit der genannten Spannungsquelle gekoppelt. Die Kopplung kann beispielsweise so ausgeführt sein, dass der Verbindungsleiter durch Reihenschaltung mit einer weiteren steuerbaren Spannungsquelle mit dem ersten Anschluss einer der beiden Tragspule verbunden ist. Dadurch ist die Potentialdifferenz zwischen dem Verbindungsleiter und dem ersten Anschluss der Tragspule vorgebbar. Für Potentialdifferenz zwischen dem Verbindungsleiter und dem ersten Anschluss der zweiten Tragspule besteht kein Freiheitsgrad, denn sie ergibt sich aus der Tatsache, dass zwischen drei beliebigen Anschlusspunkten nur zwei Potentialdifferenzen frei wählbar sind.

Es sind nach dem Stand der Technik mehrere Verfahren und Vorrichtungen bekannt, mit denen zwei Potentialdifferenzen zwischen drei Anschlusspunkten vorgebbar ausgeführt werden können. Für die vorliegende Erfindung spielt es dabei keine Rolle, welche der bekannten Methoden dabei zum Einsatz kommt. In der technischen Anwendung im Leistungsbereich von über 1 kW hat sich die Pulsweitenmodulation als zur Steuerung von Potentialdifferenzen durchgesetzt. Dabei wird nur eine einzige Spannungsquelle verwendet. In den meisten Vorrichtungen dieser Art spannt die Spannungsquelle dabei zwischen ihren beiden Polen eine feste Potentialdifferenz auf. Jeder der drei genanten Anschlusspunkte, an die das genannte Tragspulensystem angeschlossen ist, wird dabei mittels eines schnell schaltenden Schaltelementes fortwährend zwischen den beiden Polen der Spannungsquelle hin und her geschaltet. Eine solche Vorrichtung wird allgemein als "Umrichter" und die drei Anschlusspunkte als "Umrichterphasen" bzw. "Phasen" bezeichnet. Die Potentialdifferenz zwischen den Anschlusspunkten wird dabei über das Verhältnis der Zeitspannen gesteuert, mit denen die Schaltelemente die Phasen auf den Plus- bzw. Minuspol der Spannungsquelle durchschalten. Der Umrichter ist in der Technik hinlänglich bekannt und muss hier nicht weiter beschrieben werden.

Durch die Reihenschaltung der beiden Tragspulen und den zusätzlichen Anschluss des Verbindungsleiters lassen sich die Spannungen an den beiden Anschlüssen der beiden Tragspulen so vorgeben, dass die Ströme in den beiden Tragspulen individuell geregelt werden können. Jeder der beiden Ströme der beiden Tragspulen folgt dabei sehr zeitnah seinem jeweiligen Stromsollwert. Die Magnetlageranordnung, auf die sich die Erfindung bezieht, ist deshalb mit Strommesseinrichtungen ausgestattet, mit denen die Ströme in mindestens zwei der drei Anschlusspunkte bzw. Phasen gemessen werden können. Bei Umrichtern ist eine solche Strommesseinrichtung üblich. Bei der Spulenanordnung, auf die sich die Erfindung bezieht, sind die zufließenden Ströme stets gleich den abfließenden Strömen. Die Summe der Ströme in den drei Anschlusspunkten bzw. Phasen ist deshalb stets Null. Deshalb ist es zulässig, zur Einsparung einer Strommessstelle nur zwei der drei Ströme direkt zu messen und den dritten Strom indirekt durch Berechnung in Echtzeit zu ermitteln. Z. B.: $i_3 = -i_1 - i_2$. Für die Erfindung ist es unerheblich, ob der dritte Strom durch direkt durch Messung oder indirekt durch Berechnung in Echtzeit ermittelt wurde.

Jede der beiden Tragspulen, welche im üblichen Fall auf Magnetjoche, bzw. Magnetjochgruppen gewickelt sind, bauen durch den Strom ein Magnetfeld zu dem zu tragenden Körper auf, wodurch eine Anziehungskraft zwischen dem Körper und der jeweiligen Tragspule entsteht. Die beiden Tragspulen sind so zum Körper angeordnet, dass die durch ihre Ströme verursachten Magnetkräfte auf den Körper im Wesentlichen auf einer gemeinsamen Wirkungslinie liegen, aber einander entgegen zeigen. Die resultierende Kraft auf den Körper liegt stets auf der gemeinsamen Wirkungslinie, ihre Größe und ihre Vorzeichenrichtung lässt sich durch die Gewichtung der beiden Ströme in den beiden Tragspulen beeinflussen. Die vorliegende Erfindung bezieht sich somit auf eine Magnetlageranordnung, bei der die Kraft auf den Körper dadurch steuerbar ist, indem Ströme unterschiedlicher Stromstärke über die beiden Tragspulen fließen.

Anders als in der WO 93/23683, in der am Abgriff zwischen den Spulen eine Spannungsmessung erfolgt, wird vorliegend am Abgriff zwischen zwei Spulen ein Potenzial und damit eine Spannung relativ zu den anderen Anschlüssen angelegt. Dadurch erst ergibt sich die Möglichkeit, die beiden Ströme in den beiden Tragspulen mit unterschiedlicher Stromstärke vorzugeben. Im Gegensatz dazu ist in der WO 93/23683 der Strom in den beiden Spulen stets gleich groß. Auf das Potential am Verbindungsleiter wird nicht in steuernder Weise zugegriffen. Vielmehr muss sogar jeder steuernde Einfluss auf den Verbindungsleiter streng unterbleiben, damit sich ein zur Position des gelagerten Körpers eindeutiges Hochfrequenz-Differenzsignal, welches ein Spannungssignal ist, frei entfalten kann.

Um trotz der beiden gleich großen Ströme unterschiedlich starke Magnetfelder erhalten zu können, sind zusätzliche Vorrichtungen zur Überlagerung eines weiteren Magnetfeldes notwendig. Hierfür wird ein Permanentmagnet bereitgestellt. Bei der Vorrichtung, auf die sich die vorliegende Erfindung bezieht, sind die Ströme in den beiden Tragspulen durch das Anlegen eines steuerbaren Potentials an den Verbindungsleiter in unterschiedlicher Stromstärke vorgebbar. Es entfällt daher die Notwendigkeit, ein gesondertes Element zur Erzeugung der Vormagnetisierung zusätzlich zu den Tragspulen bereitzustellen, und dadurch wird die Magnetlageranordnung besonders kompakt.

Wie bei allen Vorrichtungen, die darauf beruhen, dass ein Körper durch ferromagnetische Anziehung berührungslos getragen wird, ist auch hier eine schnelle Regelung der Spulenströme vorteilhaft. Würde man beispielsweise die Spulenströme statisch so vorgeben, dass die Magnetkräfte im Gleichgewicht zur Gewichtskraft stehen, dann würde bereits die kleinste Verlagerung des Körpers dazu führen, dass der Körper an ein Magnetjoch gezogen wird und an diesem anklebt, anstatt in der Mitte zwischen den Jochen zu schweben. Das liegt daran, dass bei vorgegebenem Spulenstrom das Magnetfeld und damit auch die Anziehungskraft sich verstärken, wenn der Spalt zwischen Körper und Magnetjoch kleiner wird. Bei statisch vorgegebenen Spulenströmen ist die Lage des Körpers instabil. Der Körper wird mit hoher Beschleunigung an dem einen der beiden Joche anschlagen. Aufgabe der Regelung ist es nun, die Spulenströme so rasch zu ändern, dass der Körper vom gegenüberliegenden Joch gezogen wird, bevor er an dem einen Joch aufschlägt. Je näher sich der Körper dem Joch bereits angenähert hat, desto größer ist der Strom im gegenüberliegenden Joch auszusteuern. Dies ist ein fortwährender Prozess, der das stabile Schweben zwischen den beiden Jochen erst ermöglicht. Solche Magnetlagerregelungen haben in vielen Ausprägungsformen Eingang in den Stand der Technik gefunden. Die Regelung als solche ist nicht Gegenstand der vorliegenden Erfindung.

Zur geeigneten Aussteuerung der Ströme ist in jedem Falle eine Messung der Lage des Körpers zwischen den beiden Jochen erforderlich. Eine Vorrichtung zur magnetischen Lagerung, bei der die Kräfte mit Hilfe von Spulenströmen geregelt werden, muss daher mindestens einen Positionssensor umfassen. Erfindungsgemäß wird nun die bisher beschriebene Magnetlageranordnung gleichzeitig als Positionssensor genutzt. Dies ist deswegen möglich, weil der in der Magnetlageranordnung gelagerte Körper die Induktivität der Tragspulen beeinflusst. Üblicherweise sind die Tragspulen auf Magnetjoche aufgewickelt, und der Luftspalt zwischen dem Körper und dem Magnetjoch beeinflusst unmittelbar die Induktivität dieser Tragspule. Da nun an den zweiten Anschlüssen der Tragspulen ein Potenzial durch eine Spannungsquelle definierbar ist, lässt sich mit Hilfe der mit den ersten Anschlüssen gekoppelten Spannungsquellen eine Folge von Spannungspulsen (bevorzugt mit konstanter Frequenz) erzeugen, indem nämlich an den ersten Anschlüssen ein wechselndes Potenzial eingeprägt wird, wobei gleichzeitig das Potenzial an den zweiten Anschlüssen nicht derart wechselt (konstantes Potenzial oder auf größerer Zeitskala wechselndes Potenzial). Die Spannungspulse rufen in den Tragspulen Ströme hervor. Werden die Spannungspulse so gewählt, dass sich die Ströme nicht ausgleichen, fließt ein resultierender Strom durch die mit den zweiten Anschlüssen gekoppelte Spannungsquelle, und wenn dieser gemessen wird, lässt sich auf die Induktivität der Tragspulen und damit die Position des in der Magnetlageranordnung gelagerten Körpers zurückschließen. Zum Messen des resultierenden Stromes können beispielsweise die vorhandenen Strommessstellen eines Umrichters verwendet werden.

Sinnvollerweise wird man die Messung zur Bestimmung der Lage des Körpers zwischen den Magnetjochen nutzen, und zwar lässt sich die Position des in der Magnetlageranordnung gelagerten Körpers wie oben erläutert durch einen in die mit den zweiten Anschlüssen gekoppelten Spannungsquelle fließenden Strom stabil regeln. Wenn die mit den zweiten Anschlüssen gekoppelte Spannungsquelle dazu ausgelegt ist, eine zusätzliche Spannung mit niedrigerer Frequenz als die der Spannungspulse oder eine zusätzliche Gleichspannung abzugeben, dann kann damit die Stromverteilung in den beiden Tragspulen vorgegeben werden. Diese letztere Spannung kann man nun derart regeln, dass der gemessene, durch die Spannungspulse induzierte Strom einen vorbestimmten Stromstärkenwert hat, dass also die Induktivität einen vorbestimmten Wert hat, was einem vorbestimmten Luftspalt des Körpers zu den Magnetjochen, auf die die Tragspulen aufgewickelt sind, entspricht.

Anstatt direkt auf den Strom zu regeln, kann aus dem gemessenen Strom bzw. den gemessenen Strömen, die Position des zu lagernden Körpers abgeleitet werden. Diese Position kann als Istwert bei einer Regelung verwendet werden, wobei ein Sollwert für die Regelung z. B. durch einen Benutzer einstellbar sein kann. Wie bei einer Regelung üblich, wird der Istwert mit dem Sollwert verglichen. Das Ergebnis des Vergleichs, z. B. eine hierbei gebildete Differenz, wird bei einer Regelung der zusätzlichen Spannung eingesetzt.

Die Spannungspulse sollen im Mittel keine Kraft auf den gelagerten Körper ausüben. Daher ist es zu bevorzugen, wenn sie im zeitlichen Mittel einen Wert von Null haben. Der Strom, der durch die Spannungspulse hervorgerufen wird, übt dann in den einzelnen Tragspulen also im zeitlichen Mittel keine Kraft aus. Bevorzugt gleichen sich dann die von den beiden Tragspulen im Rahmen der Positionsbestimmung erzeugten Kräfte genau aus. Dies wird dann ermöglicht, wenn eine Steuereinrichtung die Spannungspulse am jeweiligen ersten Anschluss der Tragspulen gegenüber dem Potenzial am jeweiligen zweiten Anschluss der Tragspulen derart aneinander anpasst, dass die Spannungszeitflächen (also die Integrale über die Spannung) zwischen den beiden Anschlüssen der Tragspulen verschwinden.

Das erfindungsgemäße Verfahren kann bei magnetischen Linearführungen eingesetzt werden, wie sie etwa bei dem Transrapid verwendet sind. Bevorzugt gehört die Magnetlageranordnung zu einer Vorrichtung, bei der in ihr die Welle eines Rotors gelagert wird. Die Magnetlageranordnung ist dann Teil des Stators. Durch die Erfindung wird erstmals die Möglichkeit bereitgestellt, die Position der Welle ohne gesonderten Positionssensor stabil zu regeln.

Sind die beiden (bzw. vier) Tragspulen auf zwei gegenüberliegenden Magnetjochen angeordnet, so lässt sich die Position der Welle des Rotors in einer Koordinate messen und korrigieren, also regeln. Um eine Regelung auch in der zweiten Koordinate durchführen zu können, muss dieselbe Magnetlageranordnung ein zweites Mal bereitgestellt werden, möglichst um ca. 90° (also beispielsweise 80° bis 100° und bevorzugt 87° bis 93°) zu der ersten Magnetlageranordnung versetzt, wobei die Magnetlageranordnungen in derselben Ebene angeordnet sein können, nämlich bevorzugt in der Ebene, welche senkrecht auf der durch die Welle definierten Achse des Rotors steht.

Nachfolgend werden bevorzugte Ausführungsformen der Erfindung unter Bezug auf die Zeichnung beschrieben, wobei

FIG 1      eine erste Ausführungsform einer bei der Erfindung einsetzbaren Magnetlageranordnung anhand einer schematischen Darstellung der Verschaltung veranschaulicht,

FIG 2      eine zweite Ausführungsform einer bei der Erfindung einsetzbaren Magnetlageranordnung anhand einer schematischen Darstellung der Verschaltung veranschaulicht,

FIG 3      den Verlauf von Spannungen über die Zeit in Abwesenheit von erfindungsgemäß eingesetzten Strompulsen,

FIG 4     die hierbei induzierten Ströme veranschaulicht,

FIG 5     den Verlauf von Spannungen in Anwesenheit von erfindungsgemäß bereitgestellten Spannungspulsen zeigt,

FIG 6     die durch die Spannungen aus FIG 5 induzierten Ströme bei idealer Lage des zu lagernden Körpers und

FIG 7     diese Ströme bei Abweichung von der Ideallage des zu lagernden Körpers veranschaulichen.

Zum Lagern eines mit 10 bezeichneten Körpers, vorliegend einer Welle eines Rotors, wird ein Magnetfeld erzeugt, durch das die Welle 10 getragen wird. Die Welle 10 muss magnetisch leitfähig sein. Das Magnetfeld wird durch Strom aufgebracht, der durch Tragspulen geschickt wird, welche auf Magnetjoche 12 bzw. 12' aufgewickelt sind, die ebenfalls magnetisch leitfähig sind.

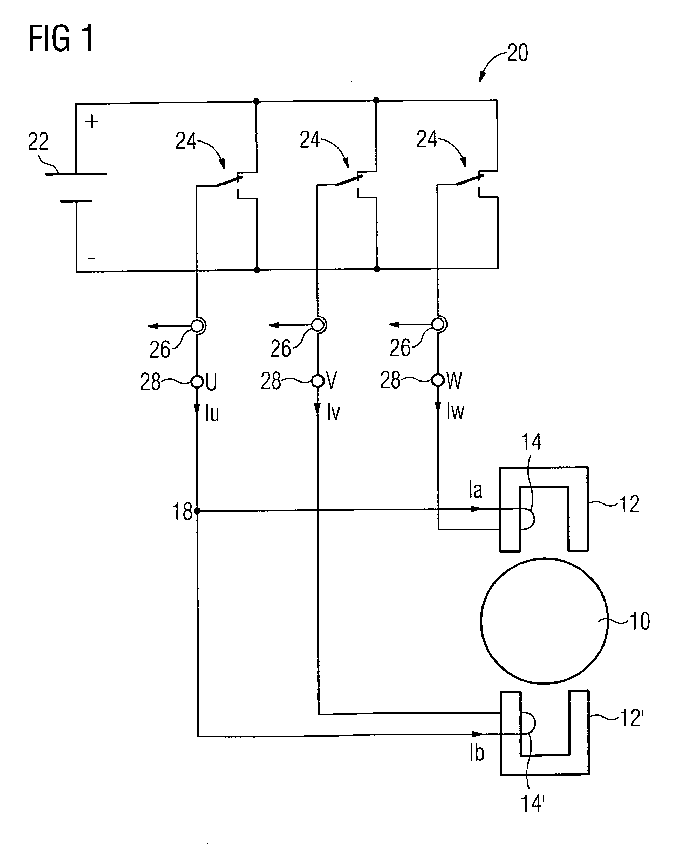

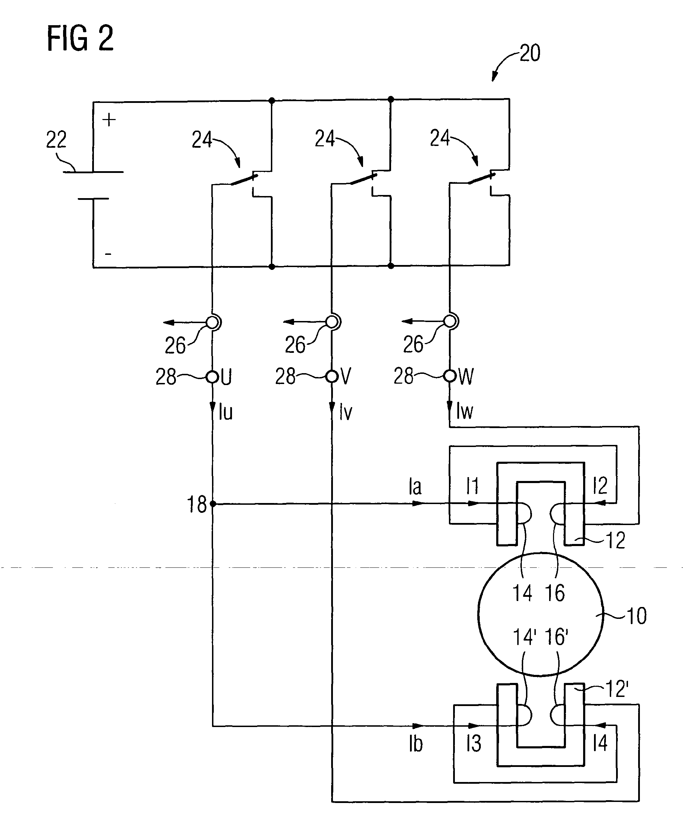

Bei einer ersten Ausführungsform der Erfindung gemäß FIG 1 ist auf jedes Magnetjoch 12 bzw. 12' eine Tragspule 14 bzw. 14' gewickelt. Bei der Ausführungsform gemäß FIG 2 tritt zu den jeweils ersten Tragspulen 14 bzw. 14' auf dem Magnetjoch 12 bzw. 12' eine zweite Tragspule 16 bzw. 16' hinzu. Die Spulen 16 und 16' können zum Bespiel aus einem nicht erfindungsgemäßen Magnetlager stammen, das auf eine erfindungsgemäße sensorlose Positionserfassung umgebaut wird. Ein solcher Umbau, bei dem eine bestehende Maschine mit neuer Leistungselektronik und neuer Steuerungstechnik aufgewertet wird, die teuren elektromechanischen Teile aber verbleiben, ist üblich und wird als "Retrofitt" bezeichnet.

Allen beiden Ausführungsformen der Erfindung ist gemeinsam, dass die Tragspulen 14, 14' in Reihe geschaltet sind. Jede Spule 14 bzw. 14' besitzt zwei Anschlüsse (Hin- und Rückleiter), wobei der Rückleiter der Spule 14 mit dem Hinleiter der Spule 14' verbunden ist. Man kann dies so sehen, dass zweite Anschlüsse der Spulen 14 und 14' mit einem Punkt 18 verbunden sind. In den Figuren ist eine Ausführungsform gezeigt, bei der ein dreiphasiger Umrichter 20 verwendet wird. Die Phasen sind mit "U", "V" und "W" gekennzeichnet. An handelsüblichen Umrichtern hat jeder Anschluss den Aufbau, dass hinter eine gemeinsame Spannungsquelle 22 Leistungsschalter 24 angeordnet sind, die das Potenzial des jeweiligen Anschlusspunktes regelmäßig zwischen dem Plus- und dem Minuspol hin- und her schalten, dass dann eine Strommesseinrichtung 26 und dann der Anschlusspunkt 28 hinter der Strommesseinrichtung 26 vorgesehen ist.

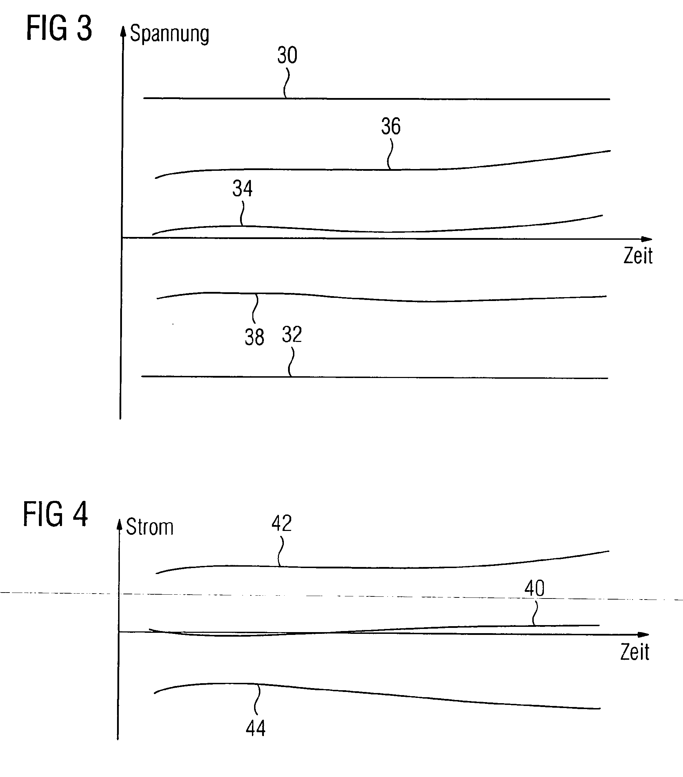

Durch das Verbinden des Punkts 18 mit der Phase U wird es möglich, den Spulen 14 und 14' unterschiedliche Ströme aufzuprägen, nämlich die Ströme Ia und Ib. Dadurch wird es möglich, auf die Welle 10 eine Stellkraft mit wählbarer Größe und Vorzeichenrichtung auszuüben. Nun soll die Stellkraft auf die Welle 10 so sein, dass die Welle 10 in einer Gleichgewichtslage geregelt wird. Die Magnetanordnung muss daher in der Lage sein, die Position der Welle 10 zumindest indirekt zu ermitteln. Dies erfolgt über eine Messung der Induktivität der Spulen 14 bzw. 14' bzw. der Wirkungen von Spannungspulsen auf den Strom der Phase U. Die FIG 3 zeigt einen typischen zeitlichen Spannungsverlauf an den drei Anschlusspunkten. Es handelt sich dabei um die Spannungen, die im betrachteten Zeitabschnitt zum stabilen Tragen des Körpers von der Regelung ausgesteuert wurden bezogen auf die Spannungsmitte zwischen Pluspol und Minuspol der Spannungsquelle 22. Sie werden im Folgenden als "Tragspannung" bezeichnet, um sie von den Spannungspulsen zu unterscheiden. Gezeigt ist eine Kurve 30 für die Spannung am Pluspol der Spannungsquelle 22, eine Kurve 32 für die Spannung am Minuspol der Spannungsquelle 22, eine Kurve 34 für die Spannung am Anschlusspunkt U, eine Kurve 36 für die Spannung am Anschlusspunkt V und eine Kurve 38 für die Spannung am Anschlusspunkt W. Die Spannung an der Spule 14' ergibt sich dabei aus der Differenz zwischen der Spannung V und der Spannung U, und die Spannung an der Spule 14 ergibt sich aus Differenz zwischen der Spannung W und der Spannung U. Die beiden Spulenspannungen können zueinander unterschiedliche Werte annehmen.

Die in der Abbildung dargestellten Spannungsverläufe sind in dieser Form an einer dreiphasigen Spannungsquelle mit analoger Spannungserzeugung zu beobachten. An einer pulsweitenmodulierten Spannungsquelle hingegen takten die Spannungen mit hoher Schaltfrequenz (mehrere kHz) zwischen dem Plus- und Minuspol hin und her. Die Spannung an einem Phasenanschluss kann dann streng genommen keinen Zwischenzustand einnehmen. Dennoch hat die obige Abbildung der Tragspannung auch in einem pulsweitenmodulierten System Gültigkeit, wenn die Spannungszwischenzustände als Tastverhältnis der Pulsweitenmodulation interpretiert werden. Auf Grund ihrer Induktivität glätten die Tragspulen den Strom, so dass bei genügend großer Schaltfrequenz die gleiche physikalisch Wirkung wie bei einer analogen Spannungserzeugung entsteht. Für die vorliegende Erfindung ist es daher unerheblich, ob die Spannungen an den drei Phasen analog oder durch PWM erzeugt wurden. Für die hier dargelegten graphischen Darstellungen wurde die analoge Betrachtung bevorzugt, weil sie leichter verständlich ist.

Die FIG 4 zeigt einen typischen zeitlichen Stromverlauf an den drei Anschlusspunkten. Es handelt sich dabei um die Ströme, die im betrachteten Zeitabschnitt zum stabilen Tragen des Körpers führen. Sie werden im Folgenden als "Tragstrom" bezeichnet, um sie von den Strompulsen zu unterscheiden, die sich als Reaktion auf die Spannungspulse ergeben. Die Kurve 40 ist der Strom über Anschlusspunkt U, die Kurve 42 über V, die Kurve 44 über W. Der Strom in Spule 14 (Phasenstrom W) kann unterschiedlich zum Strom in Spule 14' (Phasenstrom V) sein. Die Summe der drei Phasenströme muss aber stets Null sein, da außer den drei dargestellten Anschlüssen keine weiteren Anschlüsse existieren, über die Strom abfließen könnte.

Nun werde die erfindungsgemäße Magnetlageranordnung mit zugeschalteten Spannungspulsen betrachtet. Die Spannungspulse werden dabei zur Tragspannung addiert. Die Spannungspulse sollen den zum Betrieb erforderlichen Tragstrom nicht zu sehr stören. Deshalb sollen sie vorzugsweise symmetrisch um die Tragspannung liegen und zwar dergestalt, dass der Anteil der Spannungszeitfläche 46, der über der Tragspannung liegt, sich mit dem Anteil ausgleicht, der unter der Tragspannung liegt. Die Spannungspulse greifen somit nicht auf den Spannungszeitflächeninhalt der Tragspannung durch. Eine geeignete Steuereinrichtung hierfür kann in den dreiphasigen Umrichter 20 integriert sein.

Die Spannungspulse können beispielsweise in regelmäßiger zeitlicher Abfolge erzeugt werden, so dass eine Kurvenform entsteht, der eine konstante Frequenz zugeordnet werden kann. Vorzugsweise liegt diese Frequenz im Bereich einiger kHz. Bei Umrichtern mit fester Pulsfrequenz der Ausgangstransistoren ist es sehr vorteilhaft, die Spannungspulse mit eben dieser festen Ausgangspulsfrequenz zu synchronisieren bzw. direkt in das Pulsmuster der Ausgangstransistoren zu integrieren.

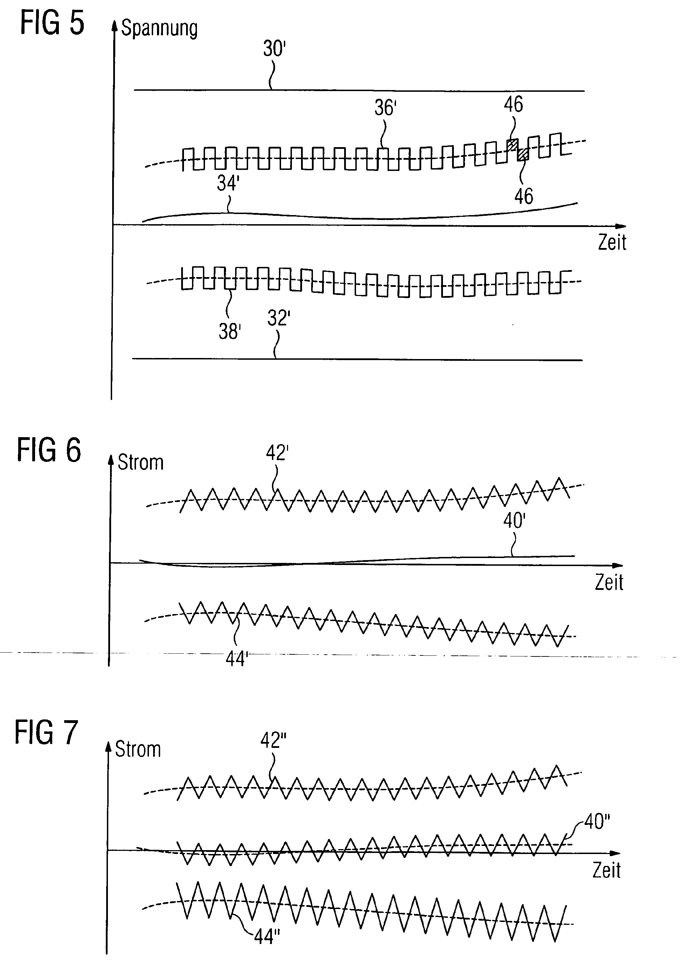

In der bevorzugten Ausführungsform werden die Spannungspulse nur auf die ersten Anschlüsse der Tragspulen geschaltet. In der FIG 1 sind dies die Anschlüsse "V" und "W" der Ansteuereinrichtung 20. Am Anschluss "U" ist zwar eine Tragspannung vorhanden, Spannungspulse sind aber nicht aufgeschaltet. In der bevorzugten Ausführungsform sind die Spannungspulse an den Anschlüssen "V" und "W" invertiert (man kann auch sagen gegenphasig) zueinander aufgeschaltet, so dass man den Anschuss "V" als Quelle und den Anschluss "W" als Senke der Spannungspulse auffassen kann. Dies ist in FIG 5 anhand der Kurven 30', 32', 36', 38' mit Definition analog zu den Kurven aus FIG 3 gezeigt. Die Spannungspulse sollten ferner so gewählt sein, dass der Wechselanteil der beiden Spannungszeitflächen 46 an den Tragspulen 14 und 14' gleich groß ist. Durch diese Symmetrie, nämlich die gleichgroßen und gegenphasigen Wechselanteile, hebt sich die durch die Spannungspulse verursachte Kraftwirkung in den beiden gegenüberliegenden Magnetjochen 12 und 12' weitgehend auf. Die von den Spannungspulsen ausgehende Störung ist daher minimal.

Wird eine äußere Spannung an eine Induktivität L angelegt, die sich von der Summe der im Stromkreis vorhandenen Spannungen unterscheidet, dann wird eine Stromänderung di/dt bewirkt:

$$di/dt \ = \ 1/L \ * \ (U_{außen} \ - \ U_{int})$$

wobei $U_{außen}$ die außen angelegte Spannung
und $U_{int}$ die im Stromkreis vorhandene Spannung ist, z. B die Summe aus Spannungsabfall am Widerstand und induzierter Spannung.

Ohne die Aufschaltung der Spannungsimpulse hält sich die von außen angelegte Spannung mit der Summe der im Stromkreis vorhandenen Spannungen gerade die Waage, so dass der Strom der Tragspulen näherungsweise konstant bleibt. Mit Aufschaltung der Spannungsimpulse steigt und fällt der Strom im Takt der Spannungspulse um den Mittelwert des Tragstroms. Beispielsweise reagiert der Strom mit dreieckförmigen Pulsen auf rechteckförmige Spannungspulse. Bei gegebener Spannungszeitfläche eines Spannungspulses wird dabei die Amplitude der Strompulse unmittelbar vom Kehrwert der Induktivität bestimmt. Dies ist in FIG 6 anhand der Kurven 40', 42', und 44' analog zu FIG 4 zu erkennen.

Bei mittiger Position des Körpers 10 zwischen den beiden Magnetjochen 12 und 12' sind die Luftspalte und damit die beiden Induktivitäten der Tragspulen 14 und 14' gleich groß. Die Amplitude der Strompulse in den beiden Tragspulen ist damit ebenfalls gleich groß. Wegen der gegenphasigen Aufschaltung der Spannungspulse sind die Strompulse ebenfalls gegenphasig, so dass keine Strompulse in die Phase "U" abfließen.

Entfernt sich die Welle 10 aus der Mitte zwischen den beiden Magnetjochen, wird die eine der Induktivitäten kleiner und die andere der Induktivitäten größer. Dies lässt sich anhand des Stromes in den Spulen 14 bzw. 14' erfassen, der durch das Anlegen der Spannungsimpulse an den Tragspulen hervorgerufen wurde, und es lässt sich in FIG 7 anhand der Kurven 40", 42" und 44" analog zu FIG 4 und FIG 6 erkennen. Die Stromstärke wird an der Phase U entweder direkt oder indirekt gemessen, denn wenn die Spulen 14 und 14' nicht mit demselben Strom beschickt werden, ist die Stromstärke IU von Null verschieden. Der Phasenanschluss, der mit den zweiten Anschlüssen der Tragspulen verbunden ist, führt sowohl den Tragstrom als auch den Anteil der Strompulse, der sich bei außermittiger Position ergibt. Für eine Positionsmessung dürfen nur die Strompulse, nicht aber der Tragstrom zur Auswertung beitragen. Der Signalinhalt der Strompulse ist deshalb vom Tragstrom zu separieren. Hierfür stehen nach dem Stand der Technik mehrere Methoden zur Verfügung. Beispielsweise könnte das Messsignal des Stroms mittels eines phasenempfindlichen Gleichrichters aufbereitet werden. Eine andere Methode besteht zum Beispiel darin, den eintreffenden Strompulsen eine Phasenlage im Drehstromsystem zuzuordnen. Umrichter nach dem Stand der Technik verfügen über entsprechende Funktionen.

Diejenigen Anteile des Stromes, denen eine bestimmte Richtung im Drehfeld zugeordnet werden kann und die darüber hinaus einen Frequenz und/oder Phasenbezug zu den Spannungspulsen aufweisen, können dann als Messsignal der Position interpretiert werden.

Bei der Anordnung gemäß FIG 1 ist somit unter Verwendung von lediglich zwei Spulen 14 und 14' das Magnetfeld aufbringbar, durch das die Welle 10 getragen werden soll, eine Kraft aufbringbar, durch die die Welle 10 bei Abweichung vom Gleichgewicht verstellt werden soll, und es kann über die Messung des durch die Spannungspulse induzierten Stroms auf das Ausmaß und die Richtung der Abweichung der Lage der Welle 10 von der Gleichgewichtslage zurückgeschlossen werden und somit eine Regelung zum Gleichgewicht hin erfolgen.

Die Ausführungsform gemäß FIG 2 unterscheidet sich von der Ausführungsform gemäß FIG 1 darin, dass zu den Tragspulen 14 und 14' in Reihe geschaltete Tragspulen 16 und 16' angeordnet sind, wobei die beiden Tragspulen 14 und 16 symmetrisch auf dem Magnetjoch 12 angeordnet sind und die beiden Tragspulen 14' und 16' symmetrisch auf dem Magnetjoch 12' angeordnet sind. Durch die im Vergleich zur Ausführungsform gemäß FIG 1 höhere Symmetrie kann das Magnetfeld homogener gestaltet werden.

Bei herkömmlichen Positionssensoren ist die Wirkfläche der Positionsmessvorrichtung klein. Bei den Magnetlageranordnungen gemäß der Erfindung (FIG 1 und FIG 2) ist die Wirkfläche der erfindungsgemäßen Positionsmessvorrichtung relativ groß. Somit verbessert sich auch die Qualität des Messergebnisses, denn dieses ergibt sich aus dem Mittelwert über eine Vielzahl von Einzelpunkten, die unter der Tragspule 14 bzw. 14' liegen, während ein herkömmlicher Positionssensor nur einen einzigen Messpunkt abbildet. Daher arbeitet die Magnetlageranordnung besonders stabil, auch wenn Biegeresonanzen, Unwuchten, Oberflächenungenauigkeiten auftreten und Rauschen vorhanden ist.

Die Magnetlageranordnung gemäß den drei Ausführungsformen ist im Vergleich zu Anordnungen des Standes der Technik, bei denen ein Positionssensor und gegebenenfalls auch Spulen zur Vormagnetisierung gesondert bereitgestellt werden müssen, besonders kompakt gebaut bzw. baubar.

**Patentansprüche**

1. Verfahren zum Lagern eines Körpers mit Hilfe einer Magnetlageranordnung, die zwei Tragspulen (14, 14') umfasst, die jeweils an einem ersten Anschluss mit einem jeweils zugehörigen Anschluss einer Spannungsquelle (V, W) gekoppelt sind, und die an einem jeweiligen zweiten Anschluss miteinander gekoppelt und so in Reihe geschaltet sind, und wobei die zweiten Anschlüsse der Tragspulen (14, 14') gemeinsam ebenfalls mit einem Anschluss einer Spannungsquelle (U) gekoppelt sind,
**dadurch gekennzeichnet, dass**
die mit den ersten Anschlüssen gekoppelten Spannungsquellen (V, W) eine Folge von Spannungspulsen erzeugen und der über den Anschluss der mit den zweiten Anschlüssen der Tragspulen (14, 14') gekoppelten Spannungsquelle (U) fließende und durch die Spannungspulse verursachte Strom gemessen wird.

2. Verfahren nach Anspruch 1, **dadurch gekennzeichnet, dass** die mit den zweiten Anschlüssen der Tragspulen (14, 14') gekoppelte Spannungsquelle (U) eine zusätzliche Spannung mit niedrigerer Frequenz als die der Spannungspulse oder eine Gleichspannung abgibt, und dass eine Regeleinrichtung (20) diese zusätzliche Spannung derart regelt, dass der gemessene, durch die Spannungspulse verursachte Strom einen vorbestimmten Stromstärkenwert hat.

3. Verfahren nach Anspruch 1, **dadurch gekennzeichnet, dass** die mit den zweiten Anschlüssen der Tragspulen (14, 14') gekoppelte Spannungsquelle (U) eine zusätzliche Spannung mit niedrigerer Frequenz als die der Spannungspulse oder eine gleiche Spannung abgibt, dass aus dem gemessenen Strom eine Position des zu lagernden Körpers abgeleitet wird und diese Position als Istwert mit einem Sollwert für die Position verglichen und bei einer Regelung der zusätzlichen Spannung eingesetzt wird.

4. Verfahren nach einem der vorhergehenden Ansprüche, **dadurch gekennzeichnet, dass** das zeitliche Mittel der Spannungspulse einen Wert von Null hat.

5. Verfahren nach einem der vorhergehenden Ansprüche, **dadurch gekennzeichnet, dass** eine Steuereinrichtung die Spannungspulse und das an dem mit den zweiten Anschlüssen gekoppelten Anschluss der Spannungsquelle angelegte Potenzial derart aneinander anpasst, dass die Spannungszeitflächen der über die beiden Spulen (14, 14') gesandten Spannungspulse gleich groß sind.

6. Vorrichtung mit zumindest einer Magnetlageranordnung, in der die Welle (10) eines Rotors gelagert ist und mit Mitteln zum Regeln der Position der Welle (10) in der Magnetlageranordnung, **dadurch gekennzeichnet, dass** die Mittel zum Regeln eine Einrichtung zum Messen einer Stromstärke aufweisen.

7. Vorrichtung nach Anspruch 6 mit zwei Magnetlageranordnungen mit zwei Tragspulen (14, 14'), die jeweils an einem ersten Anschluss mit einem jeweils zugehörigen Anschluss einer Spannungsquelle (V, W) gekoppelt sind, und die an einem jeweiligen zweiten Anschluss miteinander gekoppelt und so in Reihe geschaltet sind, und wobei die zweiten Anschlüsse der Tragspulen (14, 14') gemeinsam ebenfalls mit einem Anschluss einer Spannungsquelle (U) gekoppelt sind, wobei bei der Vorrichtung in jeder Magnetlageranordnung die beiden Tragspulen einander gegenüberliegen und die Tragspulen der beiden Magnetlageranordnungen um 80° bis 100°, bevorzugt 87° bis 93°, zueinander versetzt in derselben Ebene angeordnet sind.

8. Vorrichtung nach Anspruch 6 oder 7, **dadurch gekennzeichnet, dass** die Mittel zum Regeln dazu ausgelegt sind, aus von der Einrichtung (26) zum Messen einer Stromstärke gemessenen Werten eine Istposition abzuleiten und aufgrund eines Vergleichs der Istposition mit einer Sollposition zumindest eine Regelgröße festzulegen.

# FIG 1

# FIG 2

FIG 3

FIG 4

EP 2 131 052 A1

FIG 5

Spannung

30'

36'

46

34'

46

Zeit

38'

32'

FIG 6

Strom

42'

40'

Zeit

44'

FIG 7

Strom

42"

40"

Zeit

44"

12

**EUROPÄISCHER RECHERCHENBERICHT**

Nummer der Anmeldung

EP 08 01 0194

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| X | JP 08 145056 A (YASKAWA ELECTRIC CORP) 4. Juni 1996 (1996-06-04) * Zusammenfassung * ----- | 6,7 | INV. F16C32/04 |
| X A | DE 39 37 687 A1 (MECOS TRAXLER AG [CH]) 23. Mai 1990 (1990-05-23) * das ganze Dokument * ----- | 6,8 7 | |
| X A | SIVADASAN K: "Analysis of Self-Sensing Active Magnetic Bearings Working on Inductance Measurement Principle" IEEE TRANSACTIONS ON MAGNETICS, IEEE SERVICE CENTER, NEW YORK, NY, US, Bd. 32, Nr. 2, 1. März 1996 (1996-03-01), Seiten 329-334, XP011030194 ISSN: 0018-9464 * das ganze Dokument * ----- | 6,8 1 | |
| E | WO 2008/074045 A (UNIV WIEN TECH [AT]; SCHROEDL MANFRED [AT]) 26. Juni 2008 (2008-06-26) * Seite 7, Absatz 1 - Seite 17, letzter Absatz; Abbildungen 1-5 * ----- | 6,8 | |
| E | WO 2009/015639 A (SCHAEFFLER KG [DE]; KATZSCHMANN MICHAEL [DE]; KORNETZKY PETER [DE]) 5. Februar 2009 (2009-02-05) * das ganze Dokument * ----- | 6,8 | RECHERCHIERTE SACHGEBIETE (IPC) F16C |
| X A | WO 97/07341 A (SULZER ELECTRONICS AG [CH]; LUST ANTRIEBSTECHNIK GMBH [DE]; SCHOEB RET) 27. Februar 1997 (1997-02-27) * das ganze Dokument * ----- | 6 1,7 | |
| A | US 2007/278987 A1 (BARTHOLET MARTIN [CH] ET AL) 6. Dezember 2007 (2007-12-06) * Absatz [0043] - Absatz [0063]; Abbildungen 2-4 * ----- -/-- | 1,7 | |

Der vorliegende Recherchenbericht wurde für alle Patentansprüche erstellt

| Recherchenort | Abschlußdatum der Recherche | Prüfer |
|---|---|---|
| München | 24. März 2009 | De Jongh, Cornelis |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................................................
& : Mitglied der gleichen Patentfamilie, übereinstimmendes Dokument

EPO FORM 1503 03.82 (P04C03)

Europäisches
Patentamt

European
Patent Office

Office européen
des brevets

**EUROPÄISCHER RECHERCHENBERICHT**

**Nummer der Anmeldung**

EP 08 01 0194

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 25 37 597 A1 (PADANA AG) 3. März 1977 (1977-03-03) * Seite 10, Absatz 1 - Seite 13, Absatz 2; Abbildungen 3,4 * ----- | 1,6 | |
| E | WO 2008/154962 A (SIEMENS AG [DE]; DENK JOACHIM [DE]; KOEPKEN HANS-GEORG [DE]; STOIBER D) 24. Dezember 2008 (2008-12-24) * das ganze Dokument * ----- | 1,6,7 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 24. März 2009 | De Jongh, Cornelis |

KATEGORIE DER GENANNTEN DOKUMENTE

X : von besonderer Bedeutung allein betrachtet
Y : von besonderer Bedeutung in Verbindung mit einer
 anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
 nach dem Anmeldedatum veröffentlicht worden ist
D : in der Anmeldung angeführtes Dokument
L : aus anderen Gründen angeführtes Dokument

...................................................................
& : Mitglied der gleichen Patentfamilie, übereinstimmendes
 Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 08 01 0194

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-03-2009

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| JP | 8145056 | A | 04-06-1996 | KEINE | | | |
| DE | 3937687 | A1 | 23-05-1990 | CH | 678090 | A5 | 31-07-1991 |
| WO | 2008074045 | A | 26-06-2008 | AT | 505479 | A1 | 15-01-2009 |
| WO | 2009015639 | A | 05-02-2009 | DE | 102008007512 | A1 | 05-02-2009 |
| WO | 9707341 | A | 27-02-1997 | DE | 59610929 | D1 | 08-04-2004 |
| | | | | EP | 0845084 | A1 | 03-06-1998 |
| | | | | US | 2001013733 | A1 | 16-08-2001 |
| US | 2007278987 | A1 | 06-12-2007 | KEINE | | | |
| DE | 2537597 | A1 | 03-03-1977 | FR | 2322294 | A1 | 25-03-1977 |
| | | | | GB | 1549324 | A | 01-08-1979 |
| | | | | JP | 52037648 | A | 23-03-1977 |
| WO | 2008154962 | A | 24-12-2008 | DE | 102007028229 | B3 | 18-09-2008 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- WO 9323683 A
- EP 2007060413 W